# EUROPEAN PATENT APPLICATION

(11) **EP 2 224 581 A2**
(43) Date of publication of application: **01.09.2010**
(21) Application number: 10154500.2
(22) Date of filing: 24.02.2010
(51) Int. Cl.: H02K 41/03, H02K 11/00, H02K 1/27, H02K 1/14

(54) **Tubular motor**

(30) Priority: 27.02.2009 IT BO20090118
(71) Applicant: Societa' Industriale Motori Elettrici S.I.M.E.L. S.p.A., 44049 Vigarano Mainarda (FE) (IT)
(72) Inventor: Balboni, Cesare, 44049, VIGARANO MAINARDA (Ferrara) (IT); Milanesi, Filippo, 47018, SANTA SOFIA (Forlì-Cesena) (IT); Serra, Giovanni, 40017, SAN GIOVANNI IN PERSICETO (Bologna) (IT); Toselli, Pierluigi, 40125, BOLOGNA (IT)
(74) Representative: Lanzoni, Luciano

(57) **Abstract**

A tubular electric motor (1) comprises a stator body (2), equipped with a ferromagnetic core (6) and respective windings (14), and a driver, consisting of a rod (19) slidably and coaxially inserted in the stator body (2). The rod (19) comprises a set of permanent magnets (20) evenly distributed along the longitudinal axis (B) of the rod (19) and alternated with connecting spacer elements (21) made of ferromagnetic material. The ferromagnetic core (6) has a modular structure comprising a plurality of adjacent ferromagnetic modules (7) made by pressing of SMC (Soft Magnetic Composites).

## Description

This invention relates to a tubular electric motor. Tubular electric motors are a type of linear motor commonly used to drive working parts or objects in a straight line, in particular in robot installations, machine tools and automatic machines.

They comprise a stator, or primary, having a tubular shape, and a driver, or secondary, consisting of a rod slidably inserted in the stator. The stator body houses the motor windings, while the rod houses a set of permanent magnets which are suitably spaced from each other by connecting elements made of ferromagnetic material. The stator currents which impart translational motion to the rod are controlled by an inverter on the basis of an electrical signal representing the position of the rod relative to the stator.

The position transducer which provides the electrical signal necessary for controlling the stator currents comprises an electronic card which, according to the state of the art, is equipped with two Hall effect probes longitudinally spaced from the stator windings and aligned in a direction parallel to the longitudinal axis of the motor at 90 electrical degrees from each other.

For good operation of the above mentioned card, the probes must be at a certain distance from the longitudinal axis of the motor, that is, from the rod. This distance depends on the sensitivity of the probes, on the value of the power supply voltage and on the intensity of the magnetic induction produced by the permanent magnets housed in the rod. The distance of the probes from the stator, when the latter comprises a ferromagnetic core, must instead be such as not to detect the distortions of the magnetic field produced by the permanent magnets at the ends of the stator.

One disadvantage of prior art motors is that at times, during operation, the rod moves transversally away from its theoretical position. When this occurs, the value of magnetic field intensity detected by the probes is different from the one they would detect if the rod were in the correct longitudinal position. Consequently, when transduced, the signals supplied by the two probes, suitably interpreted during phase reconstruction based on the above mentioned spacing by 90 electrical degrees, produce a signal that identifies a longitudinal rod position that differs from the real position.

In other words, an error detecting the longitudinal position of the rod occurs and, consequently, the motor is not controlled correctly.

Another disadvantage of prior art tubular motors is the difficulty, and hence the cost, of assembling the stator body when it comprises a ferromagnetic core.

In effect, as is known, for example, from patent application WO 2004/086596, the stator core generally comprises a plurality of laminations which have an annular shape and which are spaced from each other along the longitudinal axis of the motor. To guarantee the continuity of the magnetic circuit, the laminations are connected to each other at right angles to their direction of lamination by rings of ferromagnetic material. The latter, together with the laminations, form the slots which house the respective toroidal coils constituting the windings of the motor.

When assembling a stator body of the type described above, a particularly difficult and time-consuming task is that of seating the coils in the slots while at the same time keeping the laminations and connecting rings coaxial with the longitudinal axis of the motor. What is more, an assembly defect will negatively affect the performance and reliability of the motor.

Also, the lamination connecting rings are the site of eddy currents and thus of overheating of the stator and of the motor.

Yet another disadvantage is the excessive weight of the rod, which limits the maximum operating acceleration of the motor.

A yet further disadvantage of prior art tubular motors, when they comprise a ferromagnetic core, is due to the presence of the end and cogging forces.

These forces are due to the fact that the tubular motor has a magnetic circuit whose reluctance varies with the position of the rod.

When the windings of the stator body are not powered, the rod inserted in it settles in a position of equilibrium which minimizes the reluctance of the magnetic circuit of stator and rod. During motor operation, when the stator currents move the rod out of the equilibrium position, a force is generated which initially opposes this movement. This force then tends to bring the rod towards a new position of equilibrium. This disturbing force is the sum of the above mentioned end and cogging forces.

The end force is created by the interaction of the field lines produced by the magnets with the two ends of the stator magnetic circuit.

The cogging force, on the other hand, is created by the interaction of the field lines produced by the magnets with the alternating sequence of stator teeth and slot openings in the stator magnetic circuit.

The disturbing force causes the rod to move unevenly, or intermittently, producing considerable vibrations that spread to the entire motor. These vibrations cause a great deal of noise and, at high operating speeds, may also damage the motor and/or the devices which use the motor itself.

The aim of this invention is to provide a tubular electric motor that is free of the above mentioned disadvantages.

More specifically, it is an aim of this invention to provide a tubular electric motor that is free of errors detecting the longitudinal position of the rod.

A further aim of the invention is to provide a tubular electric motor that can be assembled in an easy, quick and reliable manner.

A further aim of the invention is to provide a tubular electric motor which is inexpensive to make and assemble.

A further aim of the invention is to provide a tubular electric motor that is substantially free of eddy currents.

A further aim of the invention is to provide a tubular electric motor in which the rod is relatively light.

A further aim of the invention is to provide a tubular electric motor in which the rod moves smoothly and without disturbance.

This invention accordingly provides a tubular electric motor that comprises the features defined in any of the appended claims.

The invention will now be described with reference to the accompanying drawings which illustrate a preferred embodiment of it and in which:
- Figure 1 is a longitudinal cross section of a motor made according to this invention;
- Figure 2 is a detail view of some parts of the motor of Figure 1;

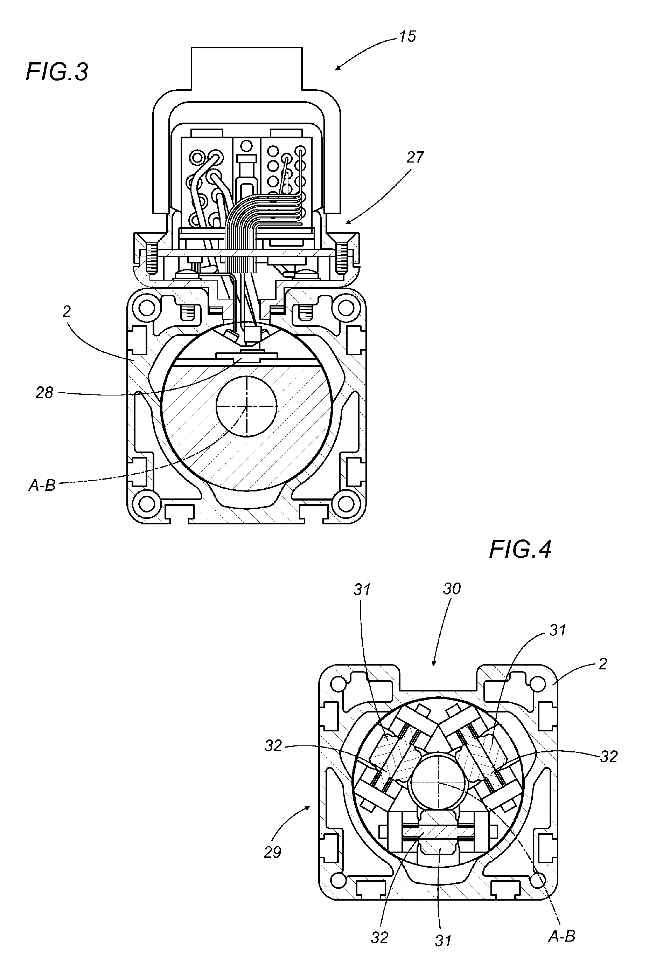

- Figure 3 is a transversal cross section of the motor of Figure 1, through line III-III;
- Figure 4 is a transversal cross section of the motor of Figure 1, through line IV-IV;
- Figure 5 is a longitudinal cross section of a detail from Figure 2;
- Figure 6 is a longitudinal cross section of another embodiment of the detail of Figure 5;
- Figure 7 is a longitudinal cross section of a detail from Figure 1; and
- Figure 8 is a perspective view of the detail of Figure 7.

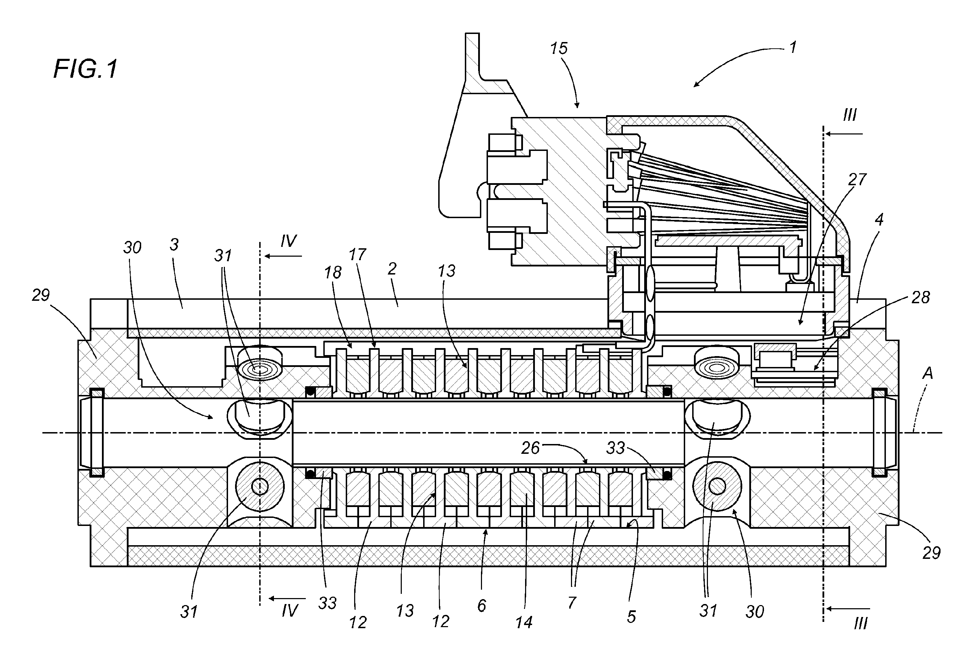

With reference to Figure 1, the reference numeral 1 denotes in its entirety a tubular linear electric motor.

The motor 1 can be used, for example, to drive working parts or objects in a straight line, in particular in robot installations, machine tools and automatic machines.

The motor 1 comprises a tubular stator body 2 extending along a respective longitudinal axis A constituting the longitudinal axis of the motor 1. The stator body 2 has a first longitudinal end 3 and a second longitudinal end 4, opposite each other, and forms in the central inside part of it a substantially cylindrical chamber 5 which houses a ferromagnetic core 6.

The ferromagnetic core 6, or stator magnetic circuit, has a modular structure comprising a plurality of adjacent ferromagnetic modules 7 arranged around the longitudinal axis A.

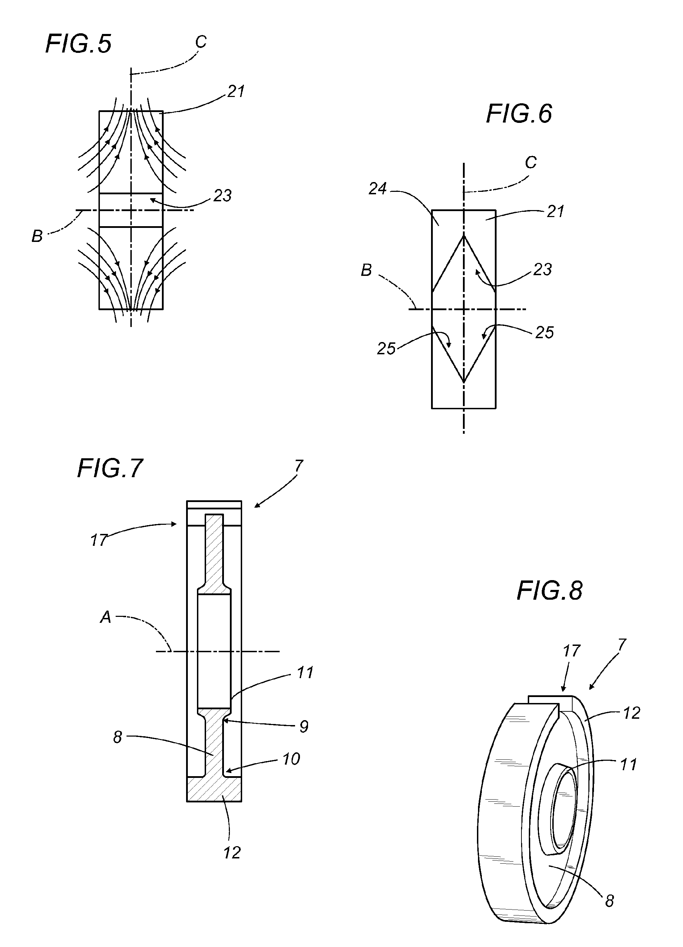

The modules 7, illustrated in detail in Figures 7 and 8, are all identical and are made of SMC (Soft Magnetic Composites) using a pressing technique.

In this technique, the term SMC (Soft Magnetic Composites) denotes the composite ferromagnetic materials obtained by dispersing ferrous magnetic powders in an alloying element and subjecting the composite obtained to a heating and compaction cycle inside a mould.

The main advantages offered by this technique are the possibility of making isotropic ferromagnetic elements, that is to say, having three-dimensional magnetic properties, complex shape, and low eddy current losses.

As illustrated in Figures 7 and 8, each module 7 has a central annular portion 8, or tooth 8, which is disk-shaped, coaxial with the axis A and radially delimited by a circular inner edge 9, closer to the axis A, and by a circular outer edge 10, further from the axis A.

An inner circular peripheral flange 11, coaxial with the axis A and forming a pole piece of the ferromagnetic core 6, extends in a T-shape from the inner edge 9; while an outer circular peripheral flange 12, also coaxial with the axis A and forming a stator rim of the ferromagnetic core 6, extends in a T-shape from the outer edge 10.

It should be noted that in other embodiments which are not illustrated because they can be directly inferred from Figures 7 and 8, the shape of the central portion 8 might, in cross section, be tapered from the inner circular edge 9, closer to the axis A, to the outer circular edge 10, further away from the axis A. Alternatively, the central portion might be embodied by radial spokes joining the edge 9 to the edge 10.

Each of the flanges 12 is in close contact with the next in succession so as to guarantee magnetic continuity between the modules 7. In this configuration, the magnetic field lines collected by the pole pieces are conveyed towards the teeth 8, go through the teeth 8 in a radial direction and reach the stator rims, starting from each of which the magnetic field lines close in an axial direction through the stator rims of the adjacent modules 7.

The flanges 11 delimit, together with the respective central annular portions 8, respective slots 13 for housing the windings 14 of the motor 1.

The windings 14, which are, in particular, three-phase windings, consist of toroidal coils connected to an electric power source, not illustrated, through interposed means 15 of known type for controlling the currents in the windings 14 themselves. The control means 15, not described in detail since they are outside the scope of this invention, comprise a customary three-phase inverter.

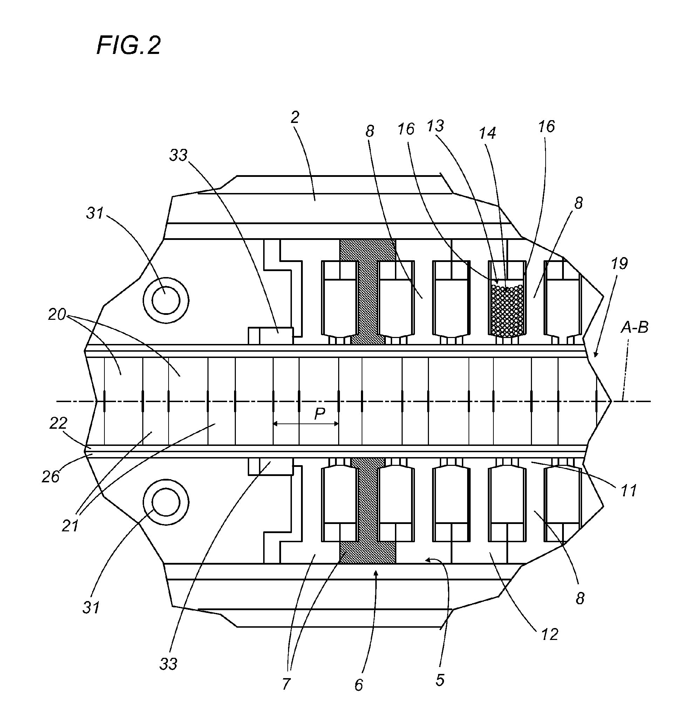

As shown in Figure 2, in each slot 13 the winding 14 is insulated from each of the two teeth 8 by means of a respective disk 16 covering the surface of the tooth 8.

The disk 16, which has substantially the same annular shape as the tooth 8, is made in sheet form, more specifically, of Nomex ®/Mylar ®.

Each of the flanges 12 has a break 17 in it through which the windings 14 extend across the slots 13. As illustrated in Figure 1, the breaks 17 are aligned with each other along a direction parallel to the axis A to form a connecting channel 18 between the slots 13.

Coaxially and slidably inserted in the stator body 2 there is a driver consisting of a cylindrical rod 19 (Figure 2) extending along a longitudinal axis B of its own.

Obviously, under normal operating conditions of the motor 1, where the stator body 2 and the rod 19 are perfectly coaxial, the axes A and B coincide with each other.

The rod 19 comprises a set of permanent magnets 20 which, along the longitudinal axis B, are evenly distributed and alternated with connecting spacer elements 21 made of ferromagnetic material. The magnets 20 and the elements 21 are housed in an amagnetic steel pipe 22.

The magnets 20 are spaced from each other to generate a magnetic field that interacts with the magnetic field produced by the stator currents, extend along the entire longitudinal axis of the rod 19 and are positioned with their respective North and South poles arranged in alternating fashion in such a way that like poles face each other (Figure 2).

The number and size of the magnets 20 and of the elements 21 depend on the rating of the motor 1 and on the working stroke of the rod 19 determined at the design stage. Obviously, the number and size of the modules 7 and the rating of the windings 14 also depend on these parameters.

The connecting spacer elements 21 are all identical and are made preferably of SMC (Soft Magnetic Composites) using a pressing technique.

More specifically, as shown in Figure 5, since the magnetic induction lines thin out from the periphery towards the centre of the elements 21, each element 21 is conveniently hollow in its central portion so as to reduce the overall weight of the rod 19. More precisely, each element 21 has the shape of a disk with a central coaxial cylindrical cavity 23, consisting of a through hole.

In more general terms, each element 21 has a central cavity 23 that is symmetrical about the axis B and symmetrical about a middle plane C at a right angle to the axis B.

For example, according to the alternative embodiment shown in Figure 6, the cavity 23 decreases in width from the centre to the longitudinal ends of the element 21. In this case, each spacer element 21 conveniently consists of two hollow half-shells 24, obtained by pressing, facing each other at the above mentioned middle plane C.

More in detail, in this case, the cavity 23 consists of two truncated cone shaped half-cavities 25 made in the respective half-shells 24 and communicating uninterruptedly with each other across the middle plane C.

Between the pole pieces which coaxially surround the rod 19, and the rod 19 itself, there is an interposed tubular element 26, made preferably of Nomex ®/Mylar ®.

The tubular element 26, within which the rod 19 slides coaxially, also serves to protect the rod. In effect, on the one hand, it prevents the rod 19 from coming into direct contact with the pole pieces and, on the other, it prevents the epoxy resins which impregnate the windings 14 from leaking through the slot 13 openings between one pole piece and the next. At the same time, it is the epoxy resins that keep the tubular element 26 closely adherent to the pole pieces, stabilizing both their position and their substantially cylindrical shape.

The stator currents which impart translational motion to the rod 19 are controlled by the above mentioned control means 15 on the basis of an electrical signal representing the position of the rod 19 relative to the stator body 2, and more precisely, relative to the windings 14 and relative to the ferromagnetic core 6.

The position transducer which provides the electrical signal necessary for controlling the stator currents comprises an electronic card, denoted in its entirety by the reference numeral 27.

The card 27 comprises three probes 28 for measuring the intensity of the magnetic field and arranged in a predetermined fixed position relative to the stator body 2 and to the rod 19.

The probes 28, of the linear output Hall effect type are spaced out evenly from each other by 120 electrical degrees in a direction parallel with the axes A and B.

Further, the probes 28 are positioned at a certain distance from the axis A so as to be suitably spaced from the rod 19. This distance depends on the sensitivity of the probes 28, on the value of the their power supply voltage and on the intensity of the magnetic induction of the field lines produced by the permanent magnets 20 housed in the rod 19. The longitudinal distance of the probes 28 from the ferromagnetic core 6 must instead be such as not to detect the distortions of the magnetic field produced by the permanent magnets 20 at the ends of the ferromagnetic core 6 the probes 28 are closest to.

Advantageously, the probes 28 and the card 27 are preassembled in the position determined at the motor 1 design stage in one of the two heads 29 for closing the longitudinal ends 3 and 4 of the stator body 2.

Unlike what is known from the prior art, the three probes 28 detect respective signals which, by suppressing the homopolar component, can be used to find the longitudinal position of the rod 19 even if it has moved transversally relative to the probes 28.

The transversal position of the rod 19 is constrained by a supporting guide device 30 advantageously preassembled in the two heads 29.

At each head 29, the device 30 comprises three rollers 31 mounted fixedly on respective pins 32, each of which is supported by a pair of bearings. The axes of the pins 32 lie in a shared plane at a right angle to the longitudinal axis of the motor, that is, to the axes A and B, and are arranged in a triangle at 120° from each other. In this situation, in their rolling motion on the outer surface of the rod 19 determined by the latter's translational motion, the rollers 31 rotate about the respective axes.

The motor 1 also comprises, associated with each of the two longitudinal ends of the ferromagnetic core 6, an auxiliary element 33 made of ferromagnetic material, coaxial with the rod 19 and interacting with the rod 19 to compensate for the magnetic interaction between the permanent magnets 20 and the modules 7 located at the ends of it.

Each element 33 is in the form of a ring made of SMC (Soft Magnetic Composites) having the same inside diameter as the modules 7.

Each element 33 is adjacent to the respective end module 7 of the ferromagnetic core 6, and, more precisely, is in mechanical and magnetic contact with the latter and is advantageously preassembled in a seat in the respective head 29. In this position, the force which the elements 33 apply on the rod 19 is equal and opposite to the disturbing force which the modules 7 apply on the rod 19. In other words, the use of the compensator elements 33 causes the stator section to adopt a particular geometric shape which practically cancels out the disturbing force which the stator applies on the rod 19.

The same effect would be obtained if the elements 33 were spaced from the respective modules 7 by a certain length, determined experimentally for example, or by that length plus a whole number of times the pole pitch P of the magnets 20.

Although the motor 1 uses two compensating elements 33, one for each end of the ferromagnetic core 6, an alternative embodiment not illustrated might have a single element 33 associated with only one end of the ferromagnetic core 6.

In a further alternative embodiment not illustrated, each element 33 might be placed side by side with one or more elements 33 according to a modular structure.

In a further alternative embodiment not illustrated, each element 33 is adjacent to and integrated with the respective ferromagnetic core 6 end module 7 which, in this case, would be different from the central modules 7.

The invention thus conceived achieves the intended aims. In effect, the presence of the three probes 28 guarantees correct detection of the longitudinal position of the rod 19 and hence correct control of the motor 1.

The correct position of the probes 28 is guaranteed by the fact that they are preassembled on a respective head 29 of the motor 1.

Furthermore, assembly of the motor 1 is easy, fast and reliable thanks to the modular structure of the ferromagnetic core 6. Perfect assembly is also guaranteed by the presence of the tubular element 26.

The modular structure of the ferromagnetic core 6 also allows obvious savings on production costs.

To this must be added the fact that the modules 7, in addition to being magnetically isotropic, are optimized in shape via a simple pressing operation and have low eddy current losses.

Thanks to its partially hollow structure, the rod 19 is relatively light, allowing the dynamic performance of the motor 1 to be improved.

Lastly, the correct positions of the compensator elements 33 and of the supporting guide device 30 are guaranteed by the fact that they are preassembled on the heads 29 of the motor 1. That means the rod 19 is perfectly aligned with the longitudinal axis A of the motor 1 and can move smoothly and without disturbance.

The invention described above is susceptible of industrial application and may be modified and adapted in several ways without thereby departing from the scope of the inventive concept. Moreover, all details of the invention may be substituted by technically equivalent elements.

## Claims

1. A tubular electric motor, comprising a tubular stator body (2), equipped with a ferromagnetic core (6) and respective windings (14), and a driver, consisting of a rod (19) slidably and coaxially inserted in the stator body (2); the rod (19) comprising a set of permanent magnets (20) distributed along the longitudinal axis (B) of the rod (19); the motor (1) being **characterized in that** the ferromagnetic core (6) has a modular structure comprising a plurality of adjacent ferromagnetic modules (7), in which each module (7) has a central annular portion (8), or tooth, which is disk-shaped, coaxial with the rod (19) and radially delimited by an inner edge (9) and by an outer edge (10); an inner peripheral flange (11) extending in a T- shape from the inner edge (9) and forming a pole piece coaxially surrounding the rod (19); an outer peripheral flange (12) extending in a T-shape from the outer edge (10) and forming a stator rim; the stator rims (12) being in contact with each other one after another and delimiting, together with the respective central annular portions (8), respective slots (13) for housing the windings (14).

2. The tubular electric motor according to claim 1, **characterized in that** each module (7) is made of SMC (Soft Magnetic Composites).

3. The tubular electric motor according to claim 1 or 2, **characterized in that** each module (7) is made by pressing.

4. The tubular electric motor according to any of the claims from 1 to 3, **characterized in that** interposed between the pole pieces (11) and the rod (19) there is a tubular element (26) for protecting the rod (19); the tubular element (26) adhering closely to the pole pieces (11).

5. The tubular electric motor according to claim 4, **characterized in that** the tubular element (26) is made of Nomex ®/Mylar ®.

6. The tubular electric motor according to any of the claims from 1 to 5, **characterized in that** in each slot (13) the winding (14) is insulated from each of the two teeth (6) by means of a respective disk (16) covering the surface of the tooth (8).

7. The tubular electric motor according to claim 6, **characterized in that** the insulated disks (16) are made of Nomex ®/Mylar ®.

8. The tubular electric motor according to any of the claims from 1 to 7, **characterized in that** it comprises, connected to at least one of the two longitudinal ends of the ferromagnetic core (6), at least one auxiliary element (33) made of ferromagnetic material, being coaxial with the rod (19) and interacting with the rod (19) to compensate for the magnetic interaction between the permanent magnets (20) and the modules (7).

9. The tubular electric motor according to claim 8, **characterized in that** the auxiliary element (33) made of ferromagnetic material consists of a ring made of SMC (Soft Magnetic Composites).

10. The tubular electric motor according to claim 8 or 9, **characterized in that** the auxiliary element (33) made of ferromagnetic material is adjacent to the respective end module (7) of the ferromagnetic core (6).

11. The tubular electric motor according to claim 8 or 9, **characterized in that** the auxiliary element (33) made of ferromagnetic material is adjacent to and integrated with the respective end module (7) of the ferromagnetic core (6).

12. The tubular electric motor according to claim 8 or 9, **characterized in that** the auxiliary element (33) made of ferromagnetic material is separated by a predetermined length from the end module (7) of the ferromagnetic core (6) opposite to it.

13. The tubular electric motor according to any of the foregoing claims from 1 to 12, **characterized in that** it also comprises means (27) for detecting the longitudinal position of the rod (19) relative to the stator body (2) and means (15) for controlling the currents in the stator windings (14) based on a signal received from the detector means (27), wherein the detector means (27) comprise three probes (28) for measuring the intensity of the magnetic field, the probes being arranged in a predetermined fixed position relative to the stator body (2) and to the rod (19); the probes (28) being spaced out evenly from each other by 120 electrical degrees in a direction parallel with the longitudinal axis (A) of the motor (1).

14. The tubular electric motor according to claim 13, **characterized in that** the probes (28) are of the Hall effect type.

15. The tubular electric motor according to any of the foregoing claims from 1 to 14, **characterized in that** the permanent magnets (20) are evenly alternated along the longitudinal axis (B) of the rod (19) with connecting spacer elements (21) made of ferromagnetic material, each having, relative to its middle plane (C) at a right angle to the longitudinal axis (B) of the rod (19), a substantially symmetrical central cavity (23).

16. The tubular electric motor according to claim 15, **characterized in that** the width of the cavity (23) decreases from the centre of the spacer element (21) towards the longitudinal ends of the spacer element (21).

17. The tubular electric motor according to claim 15 or 16, **characterized in that** each connecting spacer element (21) is made of SMC (Soft Magnetic Composites).

18. The tubular electric motor according to any of the foregoing claims from 15 to 17, **characterized in that** each connecting spacer element (21) consists of two hollow half-shells (24) opposite each other at the middle plane (C); the cavity (23) consisting of two half-cavities (25) made in the respective half-shells (24) and communicating with each other across the middle plane (C).

19. The tubular electric motor according to claim 18, **characterized in that** each half-shell (24) is made by pressing.

20. The tubular electric motor according to claim 18 or 19, **characterized in that** the half-cavities (25) have the shape of a truncated cone.

21. A tubular electric motor, comprising a tubular stator body (2), equipped with respective windings (14), and a driver, consisting of a rod (19) slidably and coaxially inserted in the stator body (2); the rod (19) comprising a set of permanent magnets (20) evenly distributed along the longitudinal axis (B) of the rod (19); the motor (1) also comprising means (27) for detecting the longitudinal position of the rod (19) relative to the stator body (2) and means (15) for controlling the currents in the stator windings (14) based on a signal received from the detector means (27); the motor (1) being
**characterized in that** the detector means (27) comprise three probes (28) for measuring the intensity of the magnetic field, the probes being arranged in a predetermined fixed position relative to the stator body (2) and to the rod (19); the probes (28) being spaced out evenly from each other by 120 electrical degrees in a direction parallel with the longitudinal axis (A) of the motor (1).

22. The tubular electric motor according to claim 21, **characterized in that** the probes (28) are of the Hall effect type.

23. A tubular electric motor, comprising a tubular stator body (2), equipped with respective windings (14), and a driver, consisting of a rod (19) slidably and coaxially inserted in the stator body (2); the rod (19) comprising a set of permanent magnets (20) evenly alternated along the longitudinal axis (B) of the rod (19) with connecting spacer elements (21) made of ferromagnetic material; the motor (1) being **characterized in that** each connecting spacer element (21) has, relative to its middle plane (C) at a right angle to the longitudinal axis (B) of the rod (19), a substantially symmetrical central cavity (23).

24. The tubular electric motor according to claim 23, **characterized in that** the width of the cavity (23) decreases from the centre of the spacer element (21) towards the longitudinal ends of the spacer element (21).

25. The tubular electric motor according to claim 23 or 24, **characterized in that** each connecting spacer element (21) is made of SMC (Soft Magnetic Composites).

26. The tubular electric motor according to any of the foregoing claims from 23 to 25, **characterized in that** each connecting spacer element (21) consists of two hollow half-shells (24) opposite each other at the middle plane (C); the cavity (23) consisting of two half-cavities (25) made in the respective half-shells (24) and communicating with each other across the middle plane (C).

27. The tubular electric motor according to claim 26, **characterized in that** each half-shell (24) is made by pressing.

28. The tubular electric motor according to claim 26 or 27, **characterized in that** the half-cavities (25) have the shape of a truncated cone.
